# EUROPÄISCHE PATENTSCHRIFT

(11) **EP 2 792 623 B1**
(45) Veröffentlichungstag und Bekanntmachung des Hinweises auf die Patenterteilung: **01.02.2017**
(21) Anmeldenummer: 14161966.8
(22) Anmeldetag: 27.03.2014
(51) Int. Cl.: B65G 47/08, B65G 47/24

(54) **Vorrichtung und Verfahren zum Ausbilden einer vordefinierten Formation auf einem Transportband**
Device and method for forming a predefined formation on a conveyor belt
Dispositif et procédé de réalisation d'une formation prédéfinie sur un tapis de transport

(30) Priorität: 17.04.2013 DE 102013103886
(43) Veröffentlichungstag der Anmeldung: 22.10.2014
(73) Patentinhaber: Krones Aktiengesellschaft, 93073 Neutraubling (DE)
(72) Erfinder: Hartl, Michael, 93073 Neutraubling (DE); Luber, Hans, 93073 Neutraubling (DE)
(74) Vertreter: Benninger, Johannes

(56) Entgegenhaltungen:
- EP-A1- 0 239 547
- EP-A1- 2 163 498
- EP-A2- 2 174 895
- WO-A1-2010/106529
- DE-A1-102011 104 900
- JP-A- H0 717 518
- JP-A- 2002 226 040
- US-B1- 6 390 766

## Beschreibung

Die vorliegende Erfindung betrifft eine Vorrichtung nach dem Oberbegriff des Anspruchs 8 und ein Verfahren nach dem Oberbegriff des Anspruchs 1 zum Ausbilden einer vordefinierten Formation aus mehreren Gebinden und/oder Stückgütern auf einem Transportband.

Um Gebinde und/oder Stückgüter auf Paletten anordnen oder weiteren Bearbeitungsprozessen zuführen zu können, ist es in der Praxis häufig notwendig, diese vorher zu ordnen bzw. umzusortieren. Zur Einsparung von Zeit sind Vorrichtungen und Verfahren bekannt, bei welchen das Ordnen während des Transportes der jeweiligen Gebinde erfolgen kann.

Hierbei kann vorgesehen sein, dass mehrere Gebinde vorgruppiert auf einem Gruppierband einlaufen. Auf diesem Gruppierband werden die Gebinde mit versetzt angeordneten Roboter-Achsportalsystemen zumindest anteilig quer zur Laufrichtung verschoben und/oder gedreht. Eine solche Vorrichtung bzw. ein solches Verfahren zeigt beispielsweise die europäische Patentanmeldung 1 932 783.

Die in der EP-Patentanmeldung offenbarte Vorrichtung kennt mehrere im Bereich einer Horizontalfördereinrichtung angeordnete Schieber, welche während des Transportes selektiv einzelne Gebinde verschieben. Aufgrund der konstruktiven Ausgestaltung der in der EP-Anmeldung offenbarten Vorrichtung müssen sich die jeweiligen Gebinde zum Ordnen über einen langen Weg in Längsrichtung bewegen. Eine derartige Vorrichtung ist somit zumindest aufgrund ihrer Längserstreckung mit hohem Platzbedarf verbunden, welcher in der Praxis nach Möglichkeit reduziert werden soll.

Aus der US 6,390,766 B1 ist eine Palettiervorrichtung für Schindeln bekannt. Die Palettiervorrichtung umfasst eine Fördereinrichtung, mittels welcher die Schindeln gedreht werden können. Der Fördereinrichtung sind ein Anschlussband sowie ein Shuttleförderer nachgeordnet. Über den Shuttleförderer können die Schindeln auf einer Palette abgesetzt werden.

Die WO 2010/106529 A1 offenbart eine Vorrichtung zum Ausbilden einer vordefinierten Formation nach dem Oberbegriff des Anspruchs 8 und ein Verfahren zum Ausbilden einer vordefinierten Formation nach dem Oberbegriff des Anspruchs 1.

Zudem ist aus der EP 2 174 895 A2 eine Vorrichtung zum Formen von Gebindelagen bekannt. Die Vorrichtung umfasst einen Zuleitförderer und einen weiteren Förderer, der dem Zuleitförderer nachgeordnet ist und auf welchem Gebinde gedreht werden. Hierauf folgend werden die Gebinde an einen Auslaufförderer weitergeführt.

Die DE 10 2011 104 900 A1 betrifft eine Vorrichtung zur definierten Lagenbildung von Fördergut. Mittels mehrerer Förderbänder wird eine horizontal verlaufende Förderbahn gebildet, entlang derer Fördergut befördert wird. Oberhalb der Förderbahn ist eine Dreheinheit hängend angeordnet.

Aufgabe der Erfindung ist daher eine Vorrichtung und ein Verfahren zur Verfügung zu stellen, mittels welchen das Ordnen mehrerer Gebinde und/oder Stückgüter unter Einsparung von Raumbedarf erfolgen kann. Zudem soll die Vorrichtung unkompliziert ausgestaltet sein sowie das Verfahren möglichst einfach umgesetzt werden können.

Die obige Aufgabe wird durch ein Verfahren zum Ausbilden einer vordefinierten Formation mit den Merkmalen im Anspruch 1 sowie durch eine Vorrichtung zum Ausbilden einer vordefinierten Formation mit den Merkmalen im Anspruch 8 gelöst. Weitere vorteilhafte Ausgestaltungen werden durch die Unteransprüche beschrieben.

Die vordefinierte Formation wird ausgebildet zum Zwecke einer nachgeordneten Palettierung. Der erfindungsgemäßen Vorrichtung kann daher in bevorzugten Ausführungsformen eine Palettierstation nachgeordnet sein.

Die vordefinierte Formation kann beispielsweise aus jeweils zwei Gebinden und/oder Stückgütern bestehen. In weiteren zahlreichen Ausführungsformen kann die vordefinierte Formation aus drei oder mehr als drei Gebinden und/oder Stückgütern bestehen. Beispielsweise kann vorgesehen sein, dass mehrerer Gebinde und/oder Stückgüter bei vordefinierter Formation nebeneinander und/oder hintereinander angeordnet sind. Denkbar ist auch, dass wenigstens zwei der Gebinde und/oder Stückgüter bei vordefinierter Formation miteinander in Oberflächenkontakt gebracht sind bzw. aneinander anstehen. Ein derartiger Oberflächenkontakt ist jedoch nicht zwingend, da, wie nachfolgend noch näher beschrieben, ggf. auch eine Verdichtung bzw. Konzentrierung der vordefinierten Formation erfolgen kann. Auch kann es sein, dass wenigstens zwei der Gebinde und/oder Stückgüter in vordefinierter Formation parallel zueinander geführt werden und/oder dass wenigstens zwei der Gebinde und/oder Stückgüter bei vordefinierter Formation miteinander in Transportrichtung fluchten. Beispielsweise können die wenigstens zwei der Gebinde und/oder Stückgüter in zweiter Förderrichtung auf wenigstens einem Auslaufband, das nachfolgend noch näher beschrieben wird, miteinander in Transportrichtung des Auslaufbandes fluchten.

Die Gebinde können mehrere Artikel umfassen, die vorzugsweise miteinander verbunden sind. Beispielsweise können die Gebinde aus mehreren Behältnissen, wie Flaschen, Dosen oder dergleichen, gebildet sein. Eine Verbindung kann beispielsweise mittels Umreifung und/oder Schrumpfverpackung ausgebildet sein. Weiter können die Stückgüter beispielsweise als Kartonagen definiert sein.

Es ist im Rahmen der vorliegenden Erfindung vorstellbar, dass eine vordefinierte Formation mehrere Gebinde und/oder Stückgüter mit unterschiedlicher Geometrie bzw. unterschiedlichem Volumen umfasst. Beispielsweise kann ein Gebinde der vordefinierten Formation eine erste Anzahl an Behältnissen aufweisen, während ein weiteres Gebinde der vordefinierten Formation eine weitere Anzahl an Behältnissen aufweist. In weiteren Ausführungsformen können sämtliche Gebinde der jeweiligen vordefinierten Formation eine identische Anzahl an Behältnissen aufweisen.

Wie vorhergehend erwähnt, wird die vordefinierte Formation unter Berücksichtigung einer nachfolgenden Palettierung gebildet. Ggf. kann zwischen der nachfolgenden Palettierung eine vorherige Verdichtung bzw. Konzentrierung sämtlicher die vordefinierte Formation bildender Gebinde und/oder Stückgüter erfolgen. Die Anzahl der Gebinde bzw. Stückgüter der vordefinierten Formation kann daher identisch zur Anzahl der Gebinde bzw. Stückgüter in einer späteren palettierfähigen Lage ausgebildet sein.

Im Rahmen des erfindungsgemäßen Verfahrens werden mehrere Gebinde und/oder Stückgüter in erster Förderrichtung auf wenigstens einem Zulaufband in Richtung mindestens eines Manipulators geführt. Der mindestens eine Manipulator ist dem wenigstens einen Zulaufband nachgeordnet sein. Vorzugsweise werden die Gebinde und/oder Stückgüter in erster Förderrichtung linear bewegt. Das wenigstens eine Zulaufband kann durch mindestens eine Horizontalfördereinrichtung ausgebildet sein.

Das wenigstens eine Zulaufband wird kontinuierlich und vorzugsweise mit gleichbleibender Fördergeschwindigkeit betrieben wird.

Weiter ist vorgesehen, dass die Gebinde und/oder Stückgüter mittels des mindestens einen Manipulators unter Berücksichtigung der vordefinierten Formation umgelenkt und auf wenigstens einem kontinuierlich betriebenem Auslaufband positioniert und/oder an wenigstens ein kontinuierlich betriebenes Auslaufband weitergegeben werden.

Hierzu umfasst der mindestens eine Manipulator wenigstens eine Greifeinrichtung.

Die Gebinde und/oder Stückgüter werden bei Umlenkung über einen dem wenigstens einen Zulaufband und dem nachfolgend noch näher beschriebenen wenigstens einen Auslaufband zwischengeordneten Orientierungsbereich geführt. Der Orientierungsbereich weist eine Horizontalfördereinrichtung auf, auf welcher die Gebinde und/oder Stückgüter während ihrer Umlenkung aufstehen. Die Horizontalfördereinrichtung ist Bestandteil des Manipulators und ist dem vorherig erwähnten wenigstens einem Zulaufband direkt nachgeordnet.

Weiter ist vorgesehen, dass die Gebinde und/oder Stückgüter in vordefinierter Formation über das wenigstens eine kontinuierlich betriebene Auslaufband in zweiter Förderrichtung, welche im Wesentlichen lotrecht bzw. senkrecht zur ersten Förderrichtung verläuft, abtransportiert werden. Das Auslaufband kann hierbei als Horizontalfördereinrichtung ausgebildet sein. In diversen Ausführungsformen können mehrere nacheinander angeordnete Auslaufbänder vorhanden sein.

Bevorzugt werden die Gebinde und/oder Stückgüter über das wenigstens eine Auslaufband in zweiter Förderrichtung linear bewegt. Das wenigstens eine Zulaufband und das wenigstens eine Auslaufband können jeweils eine Transportebene ausbilden, wobei sich die Transportebene des wenigstens einen Zulaufbandes und die Transportebene des wenigstens einen Auslaufbandes auf gleichem vertikalem Niveau befinden.

Durch die beschriebene Umlenkung der Gebinde und/oder Stückgüter mittels des mindestens einen Manipulators wird die Längserstreckung der gesamten Vorrichtung bzw. der zur Umsetzung des Verfahrens benötigte Raum in Längserstreckung stark reduziert. Weiter wird eine flexible Anpassung der gesamten Vorrichtung an zur Verfügung stehende Raumkapazitäten ermöglicht.

Der mindestens eine Manipulator verfügt über eine eigene Horizontalfördereinrichtung, die einem direkt anschließendem Zulaufband und einem direkt vorgeordnetem Auslaufband zwischengeordnet ist. Weiter werden die eigene Horizontalfördereinrichtung, das direkt anschließende Zulaufband und das direkt vorgeordnete Auslaufband kontinuierlich und vorzugsweise mit gleichbleibender Fördergeschwindigkeit betrieben.

Das Zulaufband, das Auslaufband und die eigene Horizontalfördereinrichtung können jeweils durch einen eigenen Motor angetrieben werden.

Um das Verfahren möglichst zeitoptimiert umzusetzen, kann vorgesehen sein, dass die Gebinde und/oder Stückgüter zumindest von ihrer Förderrung auf dem wenigstens einem Zulaufband bis zum Ausbilden der vordefinierten Formation ohne Unterbrechung bewegt werden. So kann es sein, dass die Gebinde mittels des mindestens einen Manipulators unter kontinuierlicher Bewegung vom wenigstens einen Zulaufband entgegengenommen, weiterbewegt und unter Berücksichtigung der vordefinierten Formation umgelenkt und auf dem wenigstens einen Auslaufband positioniert bzw. an das wenigstens eine Auslaufband weitergegeben werden. Der mindestens eine Manipulator kann daher zur Führung der Gebinde und/oder Stückgüter in erster und zweiter Förderrichtung ausgebildet sein. Vorstellbar ist beispielsweise, dass der mindestens eine Manipulator wenigstens eine bewegbare Greifeinrichtung umfasst, die bei Entgegennahme des oder der jeweiligen Gebinde und/oder Stückgüter synchron mit dem oder den jeweiligen Gebinden und/oder Stückgütern mitbewegt wird. Die Bewegung der wenigstens einen Greifeinrichtung kann somit bei einer Entgegennahme des oder der jeweiligen Gebinde und/oder Stückgüter an die Geschwindigkeit und Bewegungsrichtung der jeweiligen Gebinde und/oder Stückgüter angepasst sein. Der Manipulator bzw. die wenigstens eine bewegbare Greifeinrichtung kann daher zur abschnittsweisen Bewegung in erster Förderrichtung ausgebildet sein.

Sinnvollerweise kann somit die Geschwindigkeit der Gebinde und/oder Stückgüter bei Weiterbewegung über den mindestens einen Manipulator an die Fördergeschwindigkeit eines direkt vorgeordneten Zulaufbandes derart angepasst sein, dass die Gebinde und/oder Stückgüter bei Entgegennahme über den mindestens einen Manipulator keine wesentliche Beschleunigung und keine wesentliche Verzögerung erfahren. Wie vorhergehend erwähnt, umfasst der mindestens eine Manipulator eine eigene Horizontalfördereinrichtung umfasst. Beispielsweise kann die Fördergeschwindigkeit der eigenen Horizontalfördereinrichtung des mindestens einen Manipulators identisch zur Fördergeschwindigkeit des wenigstens einen Zulaufbandes und/oder des wenigstens einen Auslaufbandes ausgebildet sein. Die eigene Horizontalfördereinrichtung des mindestens einen Manipulators und das wenigstens eine Zulaufband fluchten in erster Förderrichtung miteinander.

Weiter kann die Geschwindigkeit der Gebinde und/oder Stückgüter bei Weitergabe und/oder Positionierung auf dem wenigstens einen Auslaufband mittels des mindestens einen Manipulators derart angepasst sein, dass die Gebinde und/oder Stückgüter bei Weitergabe und/oder Positionierung keine wesentliche Verzögerung und keine wesentliche Beschleunigung erfahren. Es ist hierbei vorstellbar, dass die Geschwindigkeit der Gebinde und/oder Stückgüter zwischen der Entgegennahme über den mindestens einen Manipulator und der Weitergabe und/oder Positionierung konstant gehalten wird. Zumindest ist jedoch vorstellbar, dass die Gebinde und/oder Stückgüter direkt bei Entgegennahme vom Zulaufband mittels des mindestens einen Manipulators und/oder direkt bei Weitergabe bzw. Positionierung auf dem wenigstens einen Auslaufband keine wesentliche Verzögerung und keine wesentliche Beschleunigung erfahren. Der mindestens eine Manipulator umfasst wenigstens eine Greifeinrichtung, so kann vorgesehen sein, dass die wenigstens eine Greifeinrichtung bei Weitergabe bzw. Positionierung der Gebinde und/oder Stückgüter an das wenigstens eine kontinuierliche betriebene Auslaufband die jeweiligen Gebinde und/oder Stückgüter synchron zur Fördergeschwindigkeit des wenigstens einen kontinuierlich betriebenen Auslaufbandes bewegt.

Die Fördergeschwindigkeit eines dem mindestens einen Manipulator direkt vorgeordneten Zulaufbandes kann somit identisch zur Fördergeschwindigkeit eines dem mindestens einen Manipulator direkt nachgeordneten Auslaufband ausgebildet sein.

Die Fördergeschwindigkeit der eigenen Horizontalfördereinrichtung kann identisch zur Fördergeschwindigkeit eines dem mindestens einen Manipulator direkt vorgeordneten Zulaufbandes und/oder eines dem mindestens einen Manipulator direkt nachgeordneten Auslaufbandes ausgebildet sein.

Weiter können die Fördergeschwindigkeit eines dem mindestens einen Manipulator direkt vorgeordneten Zulaufbandes und die Fördergeschwindigkeit eines dem mindestens einen Manipulator direkt nachgeordneten Auslaufbandes unterschiedlich ausgebildet sein, wobei die Anpassung der Fördergeschwindigkeit der jeweiligen Gebinde und/oder Stückgüter an die Geschwindigkeitsdifferenz bei Positionierung und/oder Weitergabe an das direkt nachgeordnete Auslaufband mittels des mindestens einen Manipulators bewirkbar ist.

Somit können die Gebinde und/oder Stückgüter während des gesamten Verfahrens bzw. mittels einer Ausführungsform der erfindungsgemäßen Vorrichtung kontinuierlich und ohne Unterbrechung bewegt werden.

Auch kann vorgesehen sein, dass die Gebinde und/oder Stückgüter zumindest anteilig über den mindestens einen Manipulator gedreht werden. Die Bewegung erfolgt hierbei unter Berücksichtigung der vordefinierten Formation. Vorstellbar ist beispielsweise, dass die Gebinde und/oder Stückgüter zumindest anteilig über den mindestens einen Manipulator um 90º oder um ein Vielfaches von 90º gedreht werden. Beispielsweise können die Gebinde und/oder Stückgüter während des Drehens mit einer Aufstandsfläche, ggf. Bestandteil einer eigenen Horizontalfördereinrichtung des mindestens einen Manipulators, in Kontakt gebracht sein.

Auch ist vorstellbar, dass die jeweiligen Gebinde und/oder Stückgüter während des Drehens angehoben werden. Beispielsweise können die jeweiligen Gebinde während ihrer Umlenkung und/oder direkt vor und/oder direkt nach ihrer Umlenkung gedreht werden. In der Praxis haben sich insbesondere Ausführungsformen bewährt, bei welchen die jeweiligen Gebinde und/oder Stückgüter während des Drehens ohne Unterbrechung weiterbewegt bzw. weitergefördert werden.

Zudem können die mehreren Gebinde und/oder Stückgüter, vorzugsweise vermittels eines Einteilbandes, parallel in Richtung des mindestens einen Manipulators geführt werden. Das Einteilband kann intermittierend betrieben werden. Auch können zwei parallele Förderstrecken des Einteilbandes gleiche Fördergeschwindigkeiten besitzen und zeitsynchron intermittierend betrieben werden. In bevorzugten Ausführungsformen kann das Einteilband einem kontinuierlich betriebenem Zulaufband direkt vorgeordnet sein. Vorstellbar ist beispielsweise, dass der intermittierende Betrieb des Einteilbandes unter Berücksichtigung der Positionierung bzw. Weitergabe der Gebinde und/oder Stückgüter durch den mindestens einen Manipulator an das wenigstens eine kontinuierliche betriebene Auslaufband erfolgt. Beispielsweise kann bei ein oder mehreren vordefinierten Formationen eine zeitgleiche Positionierung bzw. Weitergabe von wenigstens zwei Gebinden und/oder Stückgütern mittels einer Greifeinrichtung des Manipulators wünschenswert sein. Ist dies der Fall, so kann das Einteilband derart intermittierend betrieben werden, dass die wenigstens zwei Gebinde und/oder Stückgüter zur Entgegennahme zeitgleich in Richtung der einen Greifeinrichtung geführt werden.

In bevorzugten Ausführungsformen ist dem Einteilband und dem mindestens einen Manipulator das wenigstens eine Zulaufband zwischengeordnet, wobei das wenigstens eine Zulaufband kontinuierlich und mit konstanter Fördergeschwindigkeit betrieben wird. Es ist darüber hinaus in weiteren Ausführungsformen vorstellbar, dass das Einteilband direkt dem mindestens einen Manipulator vorgeordnet ist.

Zudem kann es sein, dass auf einem dem kontinuierlich betriebenem Auslaufband direkt nachgeordnetem Gruppierband mit zweiter Förderrichtung aus der vordefinierten Formation durch Verdichtung ihrer jeweiligen Gebinde und/oder Stückgüter eine palettierfähige Lage gebildet wird.

Das direkt nachgeordnete Gruppierband und das kontinuierlich betriebene Auslaufband können in zweiter Förderrichtung miteinander fluchten. Beispielsweise können zur Verdichtung ein oder mehrere senkrecht zur zweiten Förderrichtung bewegbare Schiebeelemente vorhanden sein, die zur Verdichtung mit den jeweiligen Gebinden und/oder Stückgütern der vordefinierten Formation in Kontakt gebracht werden können. Beispielsweise können die ein oder mehreren Schiebeelemente eine sich in zweiter Förderrichtung erstreckende Anschlagfläche für die jeweiligen Gebinde und/oder Stückgüter aufweisen. Denkbar ist weiter, dass ein den Gebinden und/oder Stückgütern der jeweiligen vordefinierten Formation folgendes Anschlagelement vorhanden ist, welches nach Bilden einer palettierfähigen Lage die palettierfähige Lage an eine nachgeordnete Palettierstation weitergibt. Das Anschlagelement kann sich senkrecht zur zweiten Förderrichtung erstrecken. Bei Weitergabe kann die palettierfähige Lage mittels des Anschlagelementes mit einer Bewegungsgeschwindigkeit über das Gruppierband in zweiter Förderrichtung geführt werden, die die Fördergeschwindigkeit des Gruppierbandes übersteigt.

In bevorzugten Ausführungsformen können zum Bilden der palettierfähigen Lage auf dem Gruppierband in zweiter Förderrichtung vorauseilende Gebinde und/oder Stückgüter der jeweiligen vordefinierten Formation gegenüber den jeweils nachfolgenden Gebinden und/oder Stückgütern der vordefinierten Formation durch ein senkrecht zur zweiten Förderrichtung selektiv positionierbares Rückhalteelement verzögert werden, bis sämtlich nachfolgenden Gebinde und /oder Stückgüter der jeweiligen vordefinierten Formation an ihrem jeweils direkt vorauseilendem Gebinde und/oder Stückgut anstehen. Vorstellbar ist beispielsweise, dass das selektiv positionierbare Rückhalteelement von unten oder von oben in die Transportstrecke der jeweiligen vordefinierten Formation eintaucht und hierauf folgend mit dem oder den in zweiter Förderrichtung zuvorderst über das Gruppierband geführten Gebinden und/oder Stückgütern in Kontakt tritt. Bei Kontakt kann die Bewegung der jeweiligen Gebinde und/oder Stückgüter angehalten werden, wobei das oder die direkt nachfolgenden Gebinde und/oder Stückgüter an ihrem jeweils in zweiter Förderrichtung vorauseilendem und angehaltenem Gebinde und/oder Stückgut auflaufen. Vorstellbar ist, dass zeitgleich mit dem Kontakt der zuvorderst über das Gruppierband geführten Gebinde und/oder Stückgüter mit dem Rückhalteelement ein seitliches Verdichten der jeweiligen vordefinierten Formation durch die vorherig beschriebenen ein oder mehreren Schiebeelemente erfolgt.

Sofern sämtliche Gebinde und/oder Stückgüter an ihrem jeweils in zweiter Förderrichtung vorauseilendem Gebinde und/oder Stückgut anstehen, kann die palettierfähige Lage aus der jeweiligen vordefinierten Formation gebildet sein. Um ein gegenseitiges Verrutschen bzw. Verschieben von Gebinden in der palettierfähigen Lage zu verhindern, kann das Gruppierband in bevorzugten Ausführungsformen der vorliegenden Erfindung intermittierend betrieben werden und unmittelbar nach Bilden der palettierfähigen Lage über ein vordefiniertes Zeitintervall aussetzen. Da erfindungsgemäß das wenigstens eine Auslaufband kontinuierlich betrieben wird, können auch während des Aussetzens Gebinde und/oder Stückgüter vom wenigstens einem kontinuierlich betriebenem Auslaufband an das intermittierend betriebene Gruppierband weitergegeben bzw. weitergeführt werden.

Nach Aussetzen kann das Rückhalteelement nach oben oder unten von der palettierfähigen Lage weggeführt werden, wobei während oder unmittelbar nach Wegführen des Rückhalteelementes das Gruppierband wieder in Betrieb genommen ist. Hierbei kann die nun fertige palettierfähige Lage durch das Gruppierband in Richtung einer oder mehrerer nachgeordneter Palettiereinrichtungen und/oder Palettierstationen geführt werden. Bevorzugt wird jedoch die palettierfähige Lage unter Zuhilfenahme des vorherig genannte Anschlagelementes in Richtung einer nachgeordneten Palettiereinrichtung und/oder Palettierstation geschoben.

Vorstellbar ist, dass dem Gruppierband ein oder mehrere weitere Fördereinrichtungen zur Entgegennahme der palettierfähigen Lage und zum Transport in Richtung der ein oder mehreren nachgeordneten Palettiereinrichtungen und/oder Palettierstationen nachgeordnet sind. Auch kann eine Palettierstation und/oder Palettiereinrichtung dem Gruppierband direkt nachgeordnet sein.

Die Erfindung betrifft zudem eine Vorrichtung zum Ausbilden einer vordefinierten Formation aus mehreren Gebinden und/oder Stückgüter auf einem Transportband zum Zecke einer nachgeordneten Palettierung. Zur Verdeutlichung sei erwähnt, dass sämtliche vorherig beschriebenen Merkmale, welche das erfindungsgemäße Verfahren betreffen, ebenso bei diversen Ausführungsformen einer erfindungsgemäßen Vorrichtung Verwendung finden können.

Die Vorrichtung umfasst wenigstens ein Zulaufband mit erster Förderrichtung zum Antransport mehrerer Gebinde und/oder Stückgüter und wenigstens ein kontinuierlich betriebenes Auslaufband zum nachgeordneten Abtransport der formierten Gebinde und/oder Stückgüter in zweiter Förderrichtung. Auch bei erfindungsgemäßer Vorrichtung verlaufen erste Förderrichtung und zweite Förderrichtung im Wesentlichen lotrecht zueinander.

Auch weist die Vorrichtung mindestens einen Manipulator auf, der zur Positionierung und/oder Weitergabe der Gebinde und/oder Stückgüter auf das wenigstens eine Auslaufband unter Berücksichtigung der vordefinierten Formation ausgebildet ist. Die Vorrichtung kann beispielsweise als Bestandteil einer Palettieranlage ausgebildet oder einer Palettieranlage vorgeordnet sein.

Das wenigstens ein Auslaufband ist unter kontinuierlichem Betrieb und vorzugsweise mit gleichbleibender Fördergeschwindigkeit direkt dem mindestens einen Manipulator nachgeordnet ist. Zudem ist wenigstens ein Zulaufband unter kontinuierlichem Betrieb und vorzugsweise mit gleichbleibender Fördergeschwindigkeit und unterbrechungsfrei betrieben direkt dem mindestens einen Manipulator vorgeordnet. In diversen Ausführungsformen ist ebenso vorstellbar, dass sich das wenigstens eine Zulaufband zumindest abschnittsweise durch den mindestens einen Manipulator erstreckt.

In bevorzugten Ausführungsformen kann dem wenigstens einen Auslaufband eine Gruppiereinrichtung nachgeordnet sein, wobei die Gruppiereinrichtung wenigstens ein als Horizontalfördereinrichtung ausgebildetes Gruppierband bzw. Lagenbildungsband umfasst. Das wenigstens eine Gruppierband und das wenigstens eine Auslaufband können miteinander in zweiter Förderrichtung fluchten. Es ist vorstellbar, dass das Gruppierband intermittierend betreibbar ist und/oder das die Fördergeschwindigkeiten des wenigstens einen Gruppierbandes variabel ausgebildet sind.

Weiter ist wenigstens ein Zulaufband unter kontinuierlichem Betrieb und vorzugsweise mit gleichbleibender Fördergeschwindigkeit direkt dem mindestens einen Manipulator vorgeordnet.

Denkbar ist, dass die Vorrichtung ein dem mindestens einen Manipulator vorgeordnetes Einteilband aufweist, welches Einteilband wenigstens zwei parallel verlaufende Förderstrecken umfasst. Vorstellbar ist, dass das Einteilband intermittierend betrieben wird und nach Weiterführung einer definierten Anzahl an Gebinden und/oder Stückgütern über einen vordefinierten Zeitabschnitt aussetzt. Zudem kann es sein, dass dem Einteilband das wenigstens eine Zulaufband direkt nachgeordnet ist und das wenigstens eine Zulaufband dem mindestens einen Manipulator direkt vorgeordnet ist. Der mindestens eine Manipulator kann dabei ein oder mehrere Gebinde aus paralleler Zuführung entgegennehmen. Hierbei kann eine Synchronisation des Manipulators betreffend die Geschwindigkeit und Bewegungsrichtung der Gebinde auf dem wenigstens einen Zulaufband, wie vorhergehend bereits beschrieben, erfolgen.

Zur Positionierung und/oder Weitergabe der Gebinde und/oder Stückgüter umfasst der mindestens eine Manipulator wenigstens eine entlang drei Achsen bewegbare Greifeinrichtung.

Die wenigstens eine entlang drei Achsen bewegbare Greifeinrichtung kann an einem Traggestell hängend angeordnet sein. Beispielsweise kann die wenigstens eine Greifeinrichtung mit einem Schienensystem in Verbindung stehen und über das Schienensystem zur Positionierung und/oder Weitergabe der Gebinde und/oder Stückgüter verfahrbar sein. Zum Verfahren kann die wenigstens eine Greifeinrichtung mit einem Motor in Wirkverbindung stehen. Wie vorhergehend bereits erwähnt, umfasst der Manipulator eine eigene Horizontalfördereinrichtung.

Sinnvollerweise kann die wenigstens eine Greifeinrichtung bei derartigen Ausführungsformen zumindest anteilig über die Transportstrecke der eigenen Horizontalfördereinrichtung bewegbar bzw. verfahrbar sein. Die eigene Horizontalfördereinrichtung und das wenigstens eine Zulaufband können in erster Förderrichtung miteinander fluchten.

In weiteren Ausführungsformen ist vorstellbar, dass die wenigstens eine Greifeinrichtung zumindest anteilig entlang der Transportstrecke des wenigstens einen Zulaufbandes und/oder des wenigstens einen Auslaufbandes bewegbar bzw. verfahrbar ausgebildet ist.

Um die Gebinde und/oder Stückgüter in vordefinierter Formation an das wenigstens eine Auslaufband weiterzugeben bzw. auf dem wenigstens einen Auslaufband zu positionieren, kann es sein, dass die wenigstens eine entlang drei Achsen bewegbare Greifeinrichtung mindestens einen um eine vertikale Achse drehbaren Greifkopf aufweist. Sind mehr als eine Greifeinrichtung vorhanden, kann bevorzugt jede der mehreren Greifeinrichtungen einen um eine vertikale Achse drehbaren Greifkopf aufweisen.

Beispielsweise kann der Manipulator wenigstens eine erste und wenigstens eine zweite selbständig und jeweils entlang der Achsen bewegbare Greifeinrichtung umfassen, welche wenigstens eine erste Greifeinrichtung und wenigstens eine zweite Greifeinrichtung miteinander zur Positionierung und/oder Weitergabe der Gebinde und/oder Stückgüter auf das Auslaufband unter Berücksichtigung der vordefinierten Formation in Wirkverbindung gebracht sind. Beispielsweise kann die Vorrichtung eine computergestützte Steuereinheit umfassen, die mit der wenigstens einen ersten Greifeinrichtung und der wenigstens einen zweiten Greifeinrichtung in Verbindung gebracht ist. Mittels einer derartigen Steuereinheit kann ggf. die kombinierte Ansteuerung der wenigstens einen ersten Greifeinheit und der wenigstens einen zweiten Greifeinheit zur Weitergabe und/oder Positionierung der Gebinde und/oder Stückgüter an das wenigstens eine Auslaufband erfolgen.

Vorstellbar ist hierbei, dass die wenigstens eine erste Greifeinrichtung und die wenigstens eine zweite Greifeinrichtung zeitgleich jeweils ein oder mehrere Gebinde und/oder Stückgüter an das wenigstens eine Auslaufband weitergeben bzw. auf dem wenigstens einen Auslaufband positionieren. Ebenso können die wenigstens eine erste und/oder die wenigstens eine zweite Greifeinrichtung bei Bedarf intermittierend bewegt werden. Es ist denkbar, dass jeder Greifeinrichtung ein eigener Arbeitsbereich zugeordnet ist, innerhalb dessen die jeweilige Greifeinrichtung Gebinde und/oder Stückgüter aufnehmen und nach Umlenkung auf dem wenigstens einen Auslaufband positionieren bzw. an das wenigstens eine Auslaufband weitergeben kann. Hierbei kann vorgesehen sein, dass sich die Arbeitsbereiche der Greifeinrichtungen nicht überschneiden. Eine Kollision der Greifeinrichtungen kann sodann ausgeschlossen werden. In weiteren Ausführungsformen können sämtliche Greifeinrichtungen über einen gemeinsamen Arbeitsbereich verfügen, in welchem sie Gebinde und/oder Stückgüter aufnehmen und nach Umlenkung auf dem wenigstens einen Auslaufband positionieren bzw. an das wenigstens eine Auslaufband weitergeben können. Einer Kollision kann durch geeignete Steuerung der beiden Greifeinrichtungen über die Steuereinheit entgegengewirkt werden.

Vorteilhafterweise können bei derartiger Ausführungsform mit wenigstens einer ersten und wenigstens einer zweiten Greifeinrichtung mehrere Gebinde und/oder Stückgüter gleichzeitig auf dem wenigstens einen Auslaufband positioniert bzw. an das wenigstens eine Auslaufband weitergegeben werden. Aufgrund der möglichen zeitsynchronen Weitergabe bzw. Positionierung mehrerer Gebinde und/oder Stückgüter auf dem wenigstens einen Auslaufband kann die vordefinierte Formation bei derartigen Ausführungsformen schneller ausgebildet werden. Mit einem solchen Verfahren bzw. mittels einer solchen Vorrichtung ist es somit möglich, den Durchsatz gegenüber Ausführungsformen mit lediglich einer Greifeinrichtung zu erhöhen.

Zudem soll darauf hingewiesen werden, dass in weiteren Ausführungsformen auch mehr als zwei Greifeinrichtungen Verwendung finden können, welche zur Positionierung und/oder Weitergabe der Gebinde und/oder Stückgüter an das wenigstens eine Auslaufband miteinander in Wirkverbindung gebracht sind. Hierzu können die mehr als zwei Greifeinrichtung beispielsweise mit einer vorherig genannten Steuereinheit in Verbindung stehen.

Bei Verwendung von wenigstens einer ersten und wenigstens einer zweiten Greifeinrichtung hat sich gezeigt, dass die Gebinde und/oder Stückgüter zu einer der beiden Greifeinrichtungen bei benachbarter Anordnung einen weiteren Weg zurücklegen müssen, bis sie von der jeweiligen Greifeinrichtung erfasst werden können. Da, wie vorhergehend bereits erwähnt, bei diversen vordefinierten Formationen eine zeitsynchrone Weitergabe bzw. Positionierung von Gebinden und/oder Stückgütern mittels der wenigstens einen ersten Greifeinrichtung und der wenigstens einen zweiten Greifeinrichtung gewünscht ist, kann vorgesehen sein, dass die jeweiligen Gebinde und/oder Stückgüter von der wenigstens einen ersten Greifeinrichtung und der wenigstens einen zweiten Greifeinrichtung zumindest annäherungsweise zeitsynchron entgegengenommen werden können. Hierzu kann beispielsweise vorgesehen sein, dass ein vorhergehend bereits erwähntes Einteilband eine erste Förderstrecke und eine zweite Förderstrecke umfasst. Weiter können die über die erste der beiden Förderstrecken transportierten Gebinde und/oder Stückgüter mittels der wenigstens einen ersten Greifeinrichtung entgegengenommen und an das Auslaufband weitergegeben und/oder auf dem Auslaufband positioniert werden und die über die zweite der beiden Förderstrecken transportierten Gebinde und/oder Stückgüter mittels der wenigstens einen zweiten Greifeinrichtung an das Auslaufband weitergegeben und/oder auf dem Auslaufband positioniert werden. Demnach kann jede der Greifeinrichtungen jeweils zur Entgegennahme und Weitergabe von Gebinden und/oder Stückgütern einer eigenen zugeordneten Förderstrecke des Einteilbandes ausgebildet sein. Sofern mehr als zwei Greifeinrichtungen vorhanden sind, kann vorgesehen sein, dass die Anzahl der Förderstrecken des Einteilbandes der Anzahl an Greifeinrichtungen entspricht. Jeder der Greifeinrichtungen kann auch in diesem Fall eine eigene Förderstrecke zugeordnet sein.

Weiter kann es sein, dass die Vorrichtung eine dem zumindest einen Manipulator nachgeordnete Gruppiereinrichtung aufweist, die zur Bildung einer geordneten Zusammenstellung unter Verdichtung der vordefinierten Formation ausgebildet ist. Das vorherig bereits beispielhaft erwähnte und ggf. als Bestandteil der Gruppiereinrichtung ausgebildete Gruppierband kann hierbei intermittierend und/oder mit variablen Fördergeschwindigkeiten betreibbar ausgebildet sein. In besonders bevorzugten Ausführungsformen kann dem Gruppierband und dem Manipulator das wenigstens eine Auslaufband zwischengeordnet sein. Auf dem Gruppierband wird bevorzugt eine palettierfähige Lage ausgebildet, welche anschließend an ein oder mehrere Palettierstationen bzw. Palettiereinrichtungen weitergeführt wird.

Um die geordnete Zusammenstellung bzw. die palettierfähige Lage zu bilden, können, wie bereits beschreibend zum erfindungsgemäßen Verfahren erwähnt, beidseitig des Gruppierbandes ein oder mehrere Schieber angeordnet sein, die senkrecht zur Transportrichtung des Gruppierbandes hubbeweglich ausgebildet sind. Mittels einer Hubbewegung der jeweiligen Schieber kann somit eine erste Verdichtung der vordefinierten Formation zur Bildung einer geordneten Zusammenstellung durchführbar sein.

Weiter kann es sein, dass die Gruppiereinrichtung ein oder mehrere sich senkrecht zur Transportrichtung des Gruppierbandes erstreckende Rückhalteelemente aufweist, die bei eingenommener erster Position zur Bildung der geordneten Zusammenstellung die vordefinierte Formation verzögern und bei einer zweiten eingenommenen Position nach Bildung der geordneten Zusammenstellung die geordnete Zusammenstellung passieren lassen. Die jeweiligen ein oder mehreren Rückhalteelemente und die jeweiligen ein oder mehreren Schieber können ebenso mit der vorherig bereits erwähnten Steuerungseinheit in Verbindung stehen. Sinnvollerweise können das Gruppierband und das wenigstens eine Auslaufband miteinander in zweiter Förderrichtung fluchten.

In bevorzugten Ausführungsformen kann daher vorgesehen sein, dass die Gruppiereinrichtung ein dem wenigstens einem kontinuierlich betriebenem Auslaufband direkt nachgeordnetes und intermittierend betriebenes Gruppierband mit zweiter Förderrichtung aufweist, sowie wenigstens ein senkrecht zur zweiten Förderrichtung positionierbares Rückhalteelement. Das Rückhalteelement kann zum Bilden der palettierfähigen Lage mit Gebinden und/oder Stückgütern der jeweiligen vordefinierten Formation verzögernd in Kontakt bringbar sein, wobei das Gruppierband nach Bilden der palettierfähigen Lage über einen vordefinierten Zeitabschnitt aussetzt. Während des vordefinierten Zeitabschnittes bzw. während des Aussetzens des Gruppierbandes können weiterhin Gebinde und/oder Stückgüter vom wenigstens einem kontinuierlich betriebenem Auslaufband an das Gruppierband weitergeführt werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Perspektivansicht einer Ausführungsform einer erfindungsgemäßen Vorrichtung. Weiterhin verdeutlicht Figur 1 die Umsetzung einer Ausführungsform eines erfindungsgemäßen Verfahrens;
Figur 2 zeigt eine schematische Draufsicht auf die Ausführungsform aus Figur 1;
Figur 3 zeigt eine schematische Perspektivansicht einer weiteren Ausführungsform einer erfindungsgemäßen Vorrichtung. Weiterhin verdeutlicht Figur 3 die Umsetzung einer weiteren Ausführungsform eines erfindungsgemäßen Verfahrens;
Figur 4 zeigt eine schematische Draufsicht auf die Ausführungsform aus Figur 3.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind.

Das erfindungsgemäße Verfahren zum Ausbilden einer vordefinierten Formation wird durch die Merkmale des Anspruchs 1 und die erfindungsgemäße Vorrichtung zum Ausbilden einer vordefinierten Formation durch die Merkmale des Anspruchs 8 definiert. Weitere Ausführungsformen der Erfindung ergeben sich aus den abhängigen Ansprüchen.

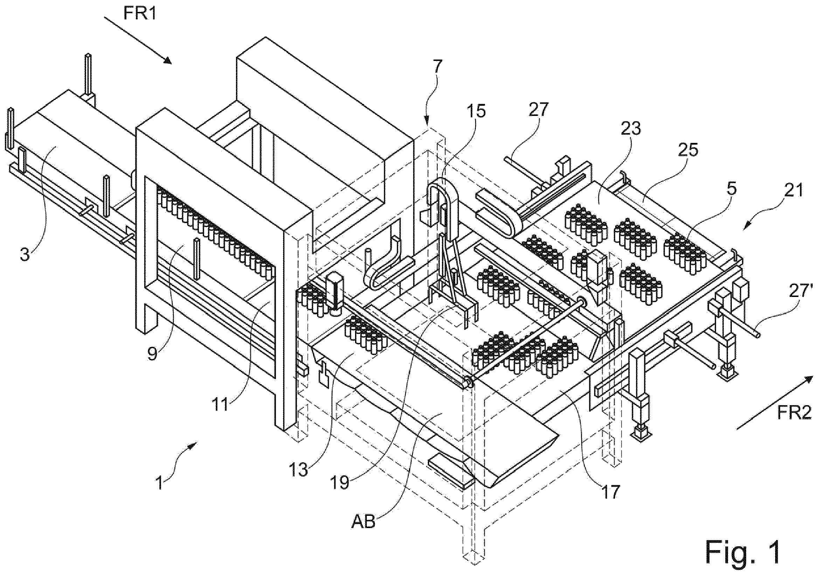

**Figur 1** zeigt eine schematische Perspektivansicht einer Ausführungsform einer erfindungsgemäßen Vorrichtung 1. Weiterhin verdeutlicht Figur 1 die Umsetzung einer Ausführungsform eines erfindungsgemäßen Verfahrens. Die Vorrichtung 1 ist vorgesehen zum Ausbilden einer vordefinierten Formation VF zum Zwecke einer nachgeordneten Palettierung. Der gesamten Vorrichtung 1 ist daher in der Praxis eine Palettierstation nachgeordnet, welche aus Gründen der Übersichtlichkeit in den Figuren der vorliegenden Patentanmeldung nicht dargestellt ist.

Die Vorrichtung 1 umfasst ein Einlaufband 3, auf welchem mehrere Gebinde 5 hintereinander und in Reihe in Richtung eines nachgeordneten Manipulators 7 transportiert werden. Der Transport der Gebinde 5 auf dem Einteilband 9 erfolgt hierbei in erster Förderrichtung FR1. Die Gebinde 5 bestehen jeweils aus einer Mehrzahl an einzelnen Behältnissen, wie Flaschen, Dosen oder dergleichen.

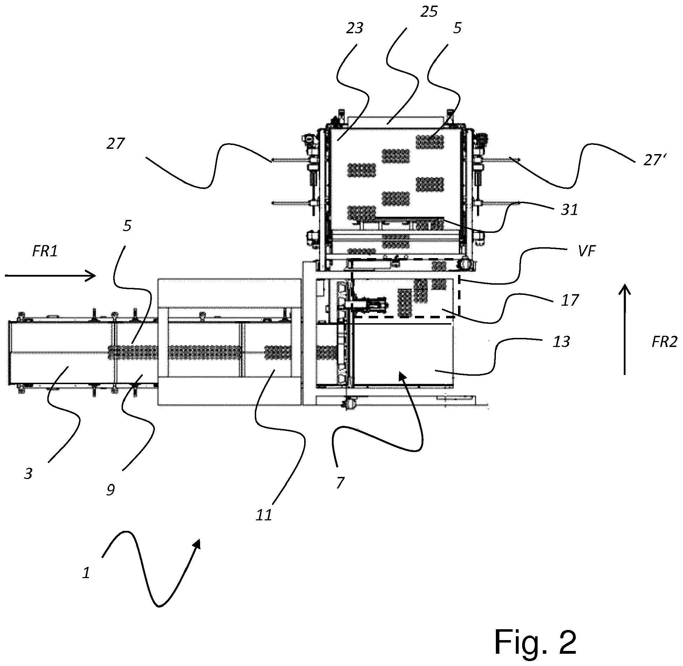

Wie in Figur 1 und darüber hinaus sehr gut in Figur 2 zu erkennen, wurden die Gebinde 5 bereits an ein nachgeordnetes Einteilband 9 weitergeführt und sind somit nicht mehr auf dem Einlaufband 3 angeordnet. Das Einlaufband 3 und das Einteilband 9 sind in erster Förderrichtung FR1 der Gebinde 5 fluchtend angeordnet, so dass eine Weiterführung der jeweiligen Gebinde 5 vom Einlaufband 3 an das Einteilband 9 ohne Umlenkung erfolgt. Im Ausführungsbeispiel der Figur 1 werden die Gebinde 5 einbahnig geführt. Vorstellbar ist jedoch in weiteren Ausführungsformen, dass mehrere Gebinde 5 auf dem Einlaufband 3, auf dem Einteilband 9 sowie auf dem Zulaufband 11 zwei- oder mehrbahnig und parallel in erster Förderrichtung FR1 geführt werden. Demnach kann der Manipulator 7 die Gebinde 5 vom Zulaufband 11 und/oder von der eigenen Horizontalfördereinrichtung 13 in paralleler Anordnung entgegennehmen.

Das Einlaufband 3 wird kontinuierlich und mit konstanter Fördergeschwindigkeit für die jeweiligen Gebinde 5 betrieben. Gegensätzlich ist für das nachgeordnete Einteilband 9 ein intermittierender Betrieb vorgesehen, so dass ein oder mehrere Gebinde 5 in definierten Abständen an das dem Einteilband 9 nachgeordnete Zulaufband 11 weitergegeben werden. Das Einlaufband 3, das Einteilband 9 und das Zulaufband 11 besitzen eine identische und erste lineare Förderrichtung FR1. Das Zulaufband 11 wird kontinuierlich und mit konstanter Fördergeschwindigkeit angetrieben. Es kann hierbei sein, dass das Einteilband 9 die jeweiligen Gebinde 5 an das Zulaufband 11 mit Fördergeschwindigkeit des Zulaufbandes 11 übergibt, so dass keine Verzögerung oder Beschleunigung der Gebinde 5 beim Wechsel vom Einteilband 9 auf das Zulaufband 11 erfolgt. Zur Vermeidung einer Deorientierung oder eins Kippens der Gebinde 5 kann eine derartige Gleichsetzung der Fördergeschwindigkeit zwischen Einteilband 9 und Zulaufband 11 zweckmäßig sein. Ebenso wird hierdurch der relative Abstand der jeweiligen Gebinde 5 in Förderrichtung FR1 bei Übergabe vom Einteilband 9 auf das Zulaufband 11 unverändert beibehalten. Das Einteilband 9 kann derart intermittierend betrieben werden, dass dem Manipulator 7 unter Berücksichtigung der zu bildenden vordefinierten Formation VF optimiert Gebinde 5 bzw. Stückgüter zur Verfügung gestellt werden können. Kennt die vordefinierte Formation VF beispielsweise eine Anordnung, bei welcher zwei Gebinde 5 parallel geführt auf dem Auslaufband 17 positioniert sind, so können durch den intermittierenden Betrieb des Einteilbandes 9 zwei Gebinde 5 zeitgleich dem Manipulator 7 zugeführt werden, wobei zu den nachfolgenden dem Manipulator 7 zugeführten Gebinde 5 durch Aussetzen des Einteilbandes 9 ein Abstand ausgebildet wird. Mittels des Manipulators 7 können die beiden Gebinde 5 zeitgleich aufgenommen und auf dem Auslaufband 17 parallel in zweiter Förderrichtung FR2 geführt positioniert werden.

Der Manipulator 7 umfasst eine eigene horizontale Fördereinrichtung 13. Diese ist ebenso in erster Förderrichtung FR1 fluchtend zum Zulaufband 11, zum Einteilband 9 und zum Einlaufband 3 angeordnet und besitzt die gleiche Fördergeschwindigkeit wie das Zulaufband 11. Ein kontinuierlicher und ununterbrochener Betrieb mit gleichbleibender Fördergeschwindigkeit ist auch für die eigene Horizontalfördereinrichtung 13 vorgesehen.

Bezugsziffer AB verweist auf einen Arbeitsbereich, innerhalb dessen die Greifeinrichtung 15 des Manipulators 7 Gebinde 5 von der eigenen Horizontalfördereinrichtung 13 entgegennehmen, umlenken und unter Berücksichtigung einer vordefinierten Formation VF auf das Auslaufband 17 weitergeben kann. Die Greifeinrichtung 15 ist hängend ausgebildet, so dass die Greifeinrichtung 15 über den jeweiligen zu entgegennehmenden Gebinden 5 abgesenkt und nach Weiterleitung bzw. Positionierung der Gebinde 5 auf dem Auslaufband 17 unter Ausführung eines Rückhubes angehoben werden kann. Bei Entgegennahme der Gebinde 5 vom Zulaufband 11 bzw. von der eigenen Horizontalfördereinrichtung 13 wird die Greifeinrichtung 15 des Manipulators 7 synchron mit dem oder den jeweiligen Gebinden 5 geführt und über dem oder den jeweiligen Gebinden 5 vertikal abgesenkt. Im Ausführungsbeispiel der Figur 1 nicht vorgesehen, jedoch vorstellbar ist, dass sich der Arbeitsbereich AB der Greifeinrichtung 15 zumindest abschnittsweise über das kontinuierlich betriebene Zulaufband 11 erstreckt.

Zur Verdeutlichung sei darauf hingewiesen, dass die eigene Horizontalfördereinrichtung 13 optionaler Bestandteil einer Vorrichtung 1 gemäß Figur 1 ist. Zudem existieren weitere Ausführungsformen, bei welchen die eigene Horizontalfördereinrichtung 13 nicht vorhanden ist und bei welchen sich ggf. das Zulaufband 11 in oder durch den Manipulator 7, wenigstens jedoch in oder durch den Arbeitsbereich AB, erstreckt.

Der Arbeitsbereich AB der Greifeinrichtung 15 und ein Transportbereich des Auslaufbandes 17 sind überlappend ausgebildet. Die Greifeinrichtung 15 kann somit bei Überführung und bei Kontakt der jeweiligen Gebinde 5 mit dem Auslaufband 15 weiterhin mit den Gebinden in Kontakt gebracht sein. Vorzugsweise kann die Greifeinrichtung 15 die jeweiligen Gebinde 5 mit Fördergeschwindigkeit des Auslaufbandes 17 an das Auslaufband 17 weitergeben bzw. auf dem Auslaufband 17 positionieren. Die Greifeinrichtung 15 wird somit bei Übergabe bzw. Positionierung der Gebinde 5 auf dem Auslaufband 17 synchron zur Fördergeschwindigkeit des Auslaufbandes 17 bewegt.

Sind die jeweiligen Gebinde 5 unter Berücksichtigung der vordefinierten Formation VF (siehe Figur 2) an das Auslaufband 17 übergeben, so wird die Greifeinrichtung 15 mittels des erwähnten Rückhubs zur Entgegennahme weiterer Gebinde 5 in Richtung der eigenen Horizontalfördereinrichtung 13 des Manipulators 7 bewegt. Die Greifeinrichtung 15 kann entlang dreier Achsen beweglich ausgebildet sein, wobei während eines derartigen Rückhubs eine Bewegungskomponente der Greifeinrichtung 15 in vertikaler Richtung nach oben weist. Im Ausführungsbeispiel der Figur 2 ist weiter vorgesehen, dass die Greifeinrichtung 15 vor Aufnahme eines Gebindes 5 von der eigenen Horizontalfördereinrichtung 13 synchron mit dem jeweiligen Gebinde 5 bewegt wird, so dass keine Verzögerung oder Beschleunigung des jeweiligen Gebindes 5 bei Aufnahme durch die Greifeinrichtung 15 erfolgt. Da sowohl das Zulaufband 11, als auch die eigene Horizontalfördereinrichtung 13 des Manipulators 7 sowie das Auslaufband 17 kontinuierlich betrieben werden und der Manipulator 7 derart ausgebildet ist ,dass er die Gebinde 5 ohne Verzögerung oder Beschleunigung vom Zulaufband 11 an das Auslaufband 17 weitergibt, werden die Gebinde 5 bei Umlenkung und Ausbilden der vordefinierten Formation kontinuierlich und unterbrechungsfrei bewegt.

Wie in Figur 1 zu erkennen, wurden die auf dem Auslaufband 17 angeordneten Gebinde 5 zur Einnahme der vordefinierten Formation VF gegenüber ihrer jeweiligen Position auf dem Zulaufband 11 um jeweils 90º gedreht. Die Greifeinrichtung 17 besitzt hierzu einen Greifkopf 19, welcher nach Erfassung des jeweiligen Gebindes 5 zusammen mit dem jeweiligen Gebindes 5 um eine vertikale Achse drehbar ausgebildet ist.

Die auf dem Auslaufband 17 gebildete vordefinierte Formation VF wird mittels des Auslaufbandes 17 in zweiter Förderrichtung FR2 abtransportiert. Die zweite Förderrichtung FR2 des Auslaufbandes 17 sowie die erste Förderrichtung FR1 des Einlaufbandes 3, des Einteilbandes 9, des Zulaufbandes 11 und der eigenen Horizontalfördereinrichtung 13 verlaufen senkrecht zueinander. Es erfolgt somit vorliegend eine Umlenkung der jeweiligen Gebinde 5 mittels der Vorrichtung 1 um 90º.

Dem Auslaufband 17 nachgeordnet findet sich eine Gruppiereinrichtung 21. Die Gruppiereinrichtung 21 umfasst ein Gruppierband 23, über welches die Gebinde 5 nach Entgegennahme vom Auslaufband 17 in zweiter Förderrichtung FR2 weiter- bzw. abtransportiert werden. Das Gruppierband 23 und das Auslaufband 17 fluchten miteinander in zweiter Förderrichtung FR2. Die Fördergeschwindigkeit des Gruppierbandes 23 und des Auslaufbandes 17 sind, sofern die Förderung des intermittierend betreibbaren Gruppierbandes 23 nicht kurzzeitig unterbrochen wird, identisch ausgebildet.

Zur Konzentrierung der vordefinierten Formation VF bzw. der die vordefinierte Formation VF bildenden Gebinde 5 umfasst die Gruppiereinrichtung 21 zwei auf entgegengesetzten Seiten der Gruppiereinrichtung 21 angeordnete und jeweils senkrecht zur zweiten Förderrichtung FR2 bewegbare Schiebeeinrichtungen 27 und 27'. Jede der Schiebeeinrichtungen 27 und 27' besitzt eine plane Anschlagfläche, die sich in zweiter Förderrichtung FR2 erstreckt und welche zur Verdichtung bzw. Konzentrierung gegen die jeweiligen Gebinde 5 der vordefinierten Formation VF führbar ist und die jeweiligen Gebinde 5 senkrecht zur zweiten Förderrichtung FR2 bewegt, bis jeweils zwei benachbarte Gebinde 5 miteinander in Oberflächenkontakt gebracht sind.

Am Ende des Gruppierbandes 23 ist ein Rückhalteelement 25 angeordnet. Das Rückhalteelement 25 kann in eine erste Position geführt werden, bei welcher es eine senkrecht zur zweiten Förderrichtung FR2 orientierte Anschlagfläche ausbildet und zur Konzentrierung den Weitertransport von Gebinden 5 verzögert. In einer weiteren nicht dargestellten Position kann das Rückhalteelement 25 nach unten abtauchen und die Weiterbeförderung der konzentrierten Gebinde 5 an nachfolgende Einrichtungen - wie beispielsweise eine Palettierstation (nicht dargestellt) - freigeben. Das Rückhalteelement 25 wechselt aus der ersten Position in die zweite Position und aus der zweiten Position in die erste Position durch eine Schwenkbewegung. Zur Weitergabe einer auf dem Gruppierband 23 gebildeten palettierfähigen Lage können dem Gruppierband 23 weitere und in Figur 1 aus Gründen der Übersichtlichkeit nicht dargestellte Fördereinrichtungen nachgeordnet sein, die ggf. in zweiter Förderrichtung FR2 mit dem Gruppierband 23 fluchten können. In bevorzugten Ausführungsformen ist jedoch dem Gruppierband 23 eine Palettierstation bzw. eine Palettiereinrichtung direkt nachgeordnet.

Wie insbesondere in Figur 2 erkennbar, verweist Bezugsziffer 31 auf ein Anschlagelement, welches nach Bilden der palettierfähigen Lage die jeweilige palettierfähige Lage in zweiter Förderrichtung FR2 an eine Palettierstation bzw. an eine Palettiereinrichtung weiterführt bzw. weiterschiebt. Die Geschwindigkeit, mittels welcher die palettierfähige Lage durch das Anschlagelement 31 in zweiter Förderrichtung FR2 geführt wird, ist vergrößert zur Transportgeschwindigkeit des Gruppierbandes 23 ausgebildet. Demnach können bei Weitergabe der palettierfähigen Lage durch das Anschlagelemenet 31 an die nachgeordnete Palettierstation bzw. Palettiereinrichtung bereits Gebinde 5 einer weiteren vordefinierten Formation VF vom Auslaufband 17 an das Gruppierband 23 weitergeleitet und durch das Gruppierband 23 in zweiter Förderrichtung FR2 geführt werden. Wie nachfolgend noch weiter beschrieben, kann das Gruppierband 23 über einen vordefinierten Zeitabschnitt aussetzen. Vorstellbar ist hierbei, dass bei Weiterführung bzw. Weiterschiebung der palettierfähigen Lage an die Palettiereinrichtung bzw. Palettierstation durch das Anschlagelement 31 das Gruppierband 23 nicht aussetzt bzw. wieder in Betrieb genommen ist.

In Figur 1 sind die Gebinde 5 auf dem Gruppierband 23 noch nicht verdichtet. Werden die Gebinde 5 mittels des Gruppierbandes 23 in zweiter Förderrichtung FR2 weiterbefördert und gegen das Rückhalteelement 25 geführt, so laufen die in zweiter Förderrichtung 5 nachfolgenden Gebinde 5 zum Bilden einer palettierfähigen Lage auf die in zweiter Förderrichtung FR2 vorauseilenden Gebinde 5 der jeweiligen vordefinierten Formation VF auf. Zur Bildung der palettierfähigen Lage werden die Gebinde 5 auf dem Gruppierband 23 zudem über die Schiebeeinrichtungen 27 und 27' konzentriert, wobei aus der Verzögerung mittels des Rückhalteelementes 25 und der Konzentrierung mittels der Schiebeeinrichtungen 27 und 27' resultierend eine palettierfähige Lage aus einer vordefinierten Formation VF herstellbar ist.

Um ein Verschieben bzw. Verdrehen durch Auflaufen der in zweiter Förderrichtung FR2 nachgeordneten Gebinde 5 gegenüber den in zweiter Förderrichtung FR2 vorauseilenden Gebinden 5 der jeweiligen vordefinierten Formation VF ausschließen zu können, ist im Ausführungsbeispiel der Figur 1 vorgesehen, dass das Gruppierband 23 intermittierend betrieben wird. So kann der Betrieb des Gruppierbandes 23 unmittelbar nach Bilden der palettierfähigen Lage aus der vordefinierten Formation VF mittels Konzentrierung durch die Schiebeeinrichtung 27 und 27' sowie das Rückhalteelement 25 über einen vordefinierten Zeitabschnitt bzw. kurzzeitig aussetzen.

Eine relative Bewegung der Gebinde 5 der jeweiligen palettierfähigen Lage sowie eine Bewegung der gesamten palettierfähigen Lage erfolgt während des vordefinierten Zeitabschnittes nicht.

**Figur 2** zeigt eine schematische Draufsicht auf die Ausführungsform aus Figur 1. Gut zu erkennen ist in Figur 2 nochmals die erste Fördereinrichtung FR1 des Zulaufbandes 11 sowie die zweite Förderrichtung FR2 des Auslaufbandes 17, welche senkrecht zueinander orientiert sind. Weiter ist die einreihige Beförderung der Gebinde 5 in Richtung des Manipulators 7 dargestellt. Wie vorhergehend bereits erwähnt, ist das Einteilband 9 bei Ausführungsform der Figuren 1 und 2 intermittierend betreibbar. Durch den intermittierenden Betrieb kann zu vorauseilenden Gebinden 5, welche auf dem kontinuierlich betriebenen Zulaufband 11 angeordnet sind, eine Lücke aufgebaut werden.

Die mittels der Vorrichtung 1 ausgebildete vordefinierte Formation VF umfasst vorliegend drei Gebinde 5, welche von der Greifeinrichtung 17 des Manipulators 7 um 90º gedreht, umgelenkt und an das kontinuierlich betriebene Auslaufband 17 weitergegeben wurden.

Die einreihige Beförderung von Gebinden 5 in Richtung des Manipulators 7 kann bevorzugt bei Ausführungsformen gewählt sein, bei welchen der Manipulator 7 lediglich eine Greifeinrichtung 15 aufweist. Sofern Gebinde 5 in Richtung des Manipulators 7 parallel befördert werden, können mehrerer Greifeinrichtungen 15 und 15' vorhanden sein, wobei jeweils eine der Greifeinrichtungen 15 und 15' zur Weitergabe und Positionierung der Gebinde 5 einer der parallelen Förderstrecken auf das Auslaufband 17 vorgesehen ist.

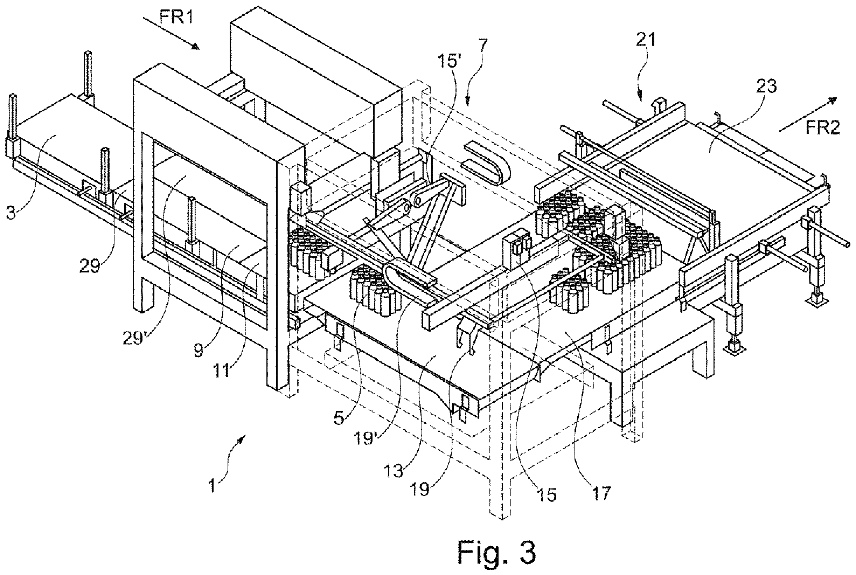

**Figur 3** zeigt eine schematische Perspektivansicht einer weiteren Ausführungsform einer erfindungsgemäßen Vorrichtung 1. Weiterhin verdeutlicht Figur 3 die Umsetzung einer weiteren Ausführungsform eines erfindungsgemäßen Verfahrens.

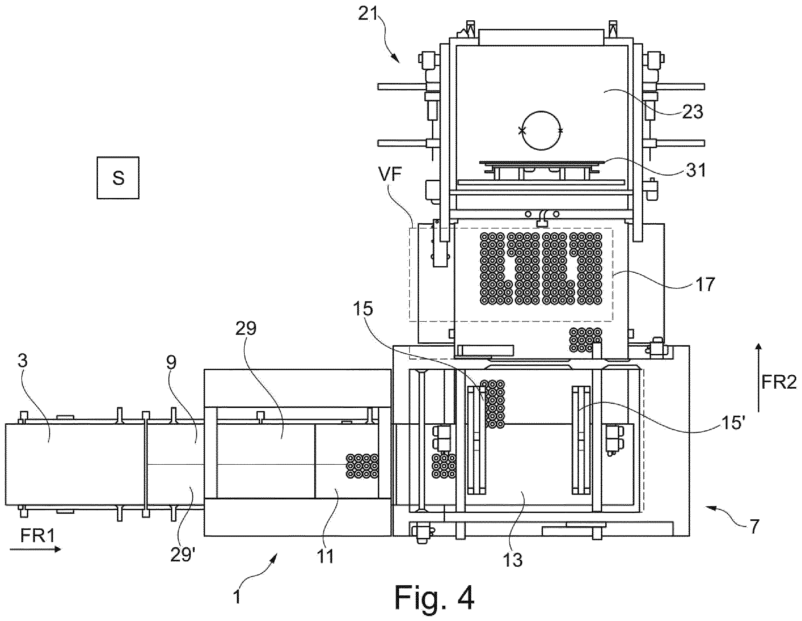

Ebenso wie in der Ausführungsform der Figuren 1 und 2 besitzt die Ausführungsform der Figuren 3 und 4 ein Einlaufband 3, ein Einteilband 9, ein Zulaufband 11 sowie eine eigene Horizontalfördereinrichtung 13, welche eine identische und erste Förderrichtung FR1 für die Gebinde 5 aufweisen. Das Einlaufband 3, das Einteilband 9, das Zulaufband 11 sowie die eigene Horizontalfördereinrichtung 13 fluchten miteinander in erster Förderrichtung FR1. Zudem werden das Einteilband 9, die eigene Horizontalfördereinrichtung 13 und das Auslaufband 17 kontinuierlich und mit gleichbleibender Fördergeschwindigkeit betrieben.

Wie insbesondere in Figur 4 zu erkennen, wird mittels des Manipulator 7 weiterhin eine vordefinierte Formation VF auf dem Auslaufband 17 durch Umlenkung und Positionierung bzw. Weitergabe der jeweiligen Gebinde 5 an das Auslaufband 17 gebildet. Auch werden das Einlaufband 3, das Zulaufband 11 und das Auslaufband 17 kontinuierlich und mit gleicher Fördergeschwindigkeit betrieben, während für das Einteilband 9 und für das Gruppierband 23 der Gruppiereinrichtung 21 ein intermittierender Betrieb vorgesehen ist. Das Auslaufband 17 sowie das Gruppierband 23 transportieren die Gebinde 5 in zweiter Förderrichtung FR2, welche zweite Förderrichtung FR2 lotrecht zur ersten Förderrichtung FR1 verläuft.

Gegensätzlich zur Ausführungsform der Figuren 1 und 2 umfasst die Ausführungsform der Figuren 3 und 4 einen Manipulator 7 mit zwei Greifeinrichtungen 15 und 15'. Beide Greifeinrichtungen 15 und 15' sind hängend ausgebildet und über ein Schienensystem zur Erfassung und Weitergabe bzw. Positionierung der Gebinde 5 auf das Auslaufband 17 verfahrbar. Jede der Greifeinrichtungen 15 und 15' ist darüber hinaus entlang drei Achsen bewegbar.

Bezugsziffer S verweist zudem auf eine Steuerungseinrichtung, welche mit den beiden Greifeinrichtungen 15 und 15' in Verbindung gebracht ist. Auf der Steuerungseinheit S sind Daten über die herzustellende vordefinierte Formation VF auf dem Auslaufband 17 hinterlegt. In Abhängigkeit der hinterlegten Informationen steuert die Steuereinrichtung S beide Greifeinrichtungen 15 und 15', um die Gebinde 5 an das Auslaufband 17 weiterzugeben. Über die Ausgestaltung der Vorrichtung 1 mit zwei Greifeinrichtungen 15 und 15' ist es beispielsweise möglich zwei Gebinde 5 zeitsynchron an das Auslaufband 17 weiterzugegeben bzw. auf dem Auslaufband 17 zu positionieren. Zudem kann es sein, dass mit der Steuerungseinheit S der intermittierende Betrieb des Gruppierbandes 23 und/oder der intermittierende Betrieb des Einteilbandes 9, ggf. unter zeitlicher Berücksichtigung der Weitergabe der vordefinierten Formation VF an das Auslaufband 17, vorgebbar ist.

Weiter umfasst jede der Greifeinrichtungen 17 und 17' einen um eine vertikale Achse drehbaren Greifkopf 19 bzw. 19' zur Entgegennahme und Weitergabe bzw. Positionierung der Gebinde 5 auf dem Auslaufband 17.

Wie in den Figuren 3 und 4 angedeutet, kann das Einteilband 9 mit zwei parallel verlaufenden Förderstrecken 29 und 29' ausgebildet sein. Vorzugsweise werden in diesem Fall die mittels der ersten Förderstrecke 29 transportierten Gebinde 5 über die erste Greifeinrichtung 15 an das wenigstens eine Auslaufband 17 weitergegeben bzw. auf dem Auslaufband 17 positioniert und die mittels der zweiten Förderstrecke 29' transportierten Gebinde 5 über die zweite Greifeinrichtung 15' an das wenigstens eine Auslaufband 17 weitergegeben bzw. auf dem Auslaufband 17 positioniert.

Auch das Ausführungsbeispiel der Vorrichtung 1, wie in den Figuren 3 und 4 gezeigt, besitzt eine Gruppiereinrichtung 21, welche identisch zur bereits in den Figuren 1 und 2 beschriebenen Gruppiereinrichtung 21 ausgebildet ist.

Optional kann vorgesehen sein, dass ein weiteres Rückhalteelement vorhanden ist, welches sich senkrecht zur zweiten Förderrichtung FR2 erstreckt und periodisch zwischen dem Auslaufband 17 und dem Gruppierband 23 zur Verzögerung von Gebinden 5 einer vordefinierten Formation auf- und abtaucht.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 3: Einlaufband
- 5: Gebinde
- 7: Manipulator
- 9: Einteilband
- 11: Zulaufband
- 13: Eigene Horizontalfördereinrichtung
- 15: Greifeinrichtung
- 17: Auslaufband
- 19: Greifkopf
- 21: Gruppiereinrichtung
- 23: Gruppierband
- 25: Rückhalteelement
- 27: Schiebeeinrichtung
- 29: Förderstrecke
- 31: Anschlagelement

- AB: Arbeitsbereich
- FR1: Erste Förderrichtung
- FR2: Zweite Förderrichtung
- S: Steuerungseinheit
- VF: Vordefinierte Formation

## Patentansprüche

1. Verfahren zum Ausbilden einer vordefinierten Formation (VF) aus mehreren Gebinden (5) und/oder Stückgütern auf einem Transportband zum Zwecke einer nachgeordneten Palettierung, bei welchem Verfahren
- mehrere Gebinde (5) und/oder Stückgüter in erster Förderrichtung (FR1) auf wenigstens einem Zulaufband (11) in Richtung mindestens eines Manipulators (7) geführt werden,
- mittels des mindestens einen Manipulators (7) unter Berücksichtigung der vordefinierten Formation (VF) umgelenkt und an wenigstens ein kontinuierlich betriebenes Auslaufband (17) weitergegeben werden,
- in vordefinierter Formation (VF) über das wenigstens eine kontinuierlich betriebene Auslaufband abtransportiert werden, wobei die vordefinierte Formation (VF) aus nebeneinander und hintereinander angeordneten Gebinden (5) und/oder Stückgütern besteht, **dadurch gekennzeichnet, dass** - das Auslaufband (17) eine zweite Förderrichtung (FR2) aufweist, welche im Wesentlichen lotrecht zur ersten Förderrichtung (FR1) verläuft, wobei
- der mindestens eine Manipulator (7) über eine eigene Horizontalfördereinrichtung (13) verfügt, die dem direkt anschließenden Zulaufband (11) und dem direkt vorgeordneten Auslaufband (17) zwischengeordnet, in erster Förderrichtung (FR1) fluchtend zum Zulaufband (11) und entlang eines ersten Endes des Auslaufbandes (17) angeordnet ist, wobei die eigene Horizontalfördereinrichtung (13), das direkt anschließende Zulaufband (11) und das direkt vorgeordnete Auslaufband (17) kontinuierlich betrieben werden und wobei
- eine Greifeinrichtung (15) des Manipulators (7) innerhalb eines Arbeitsbereichs (AB) Gebinde (5) von der eigenen Horizontalfördereinrichtung (13) entgegennimmt, umlenkt und unter Berücksichtigung der vordefinierten Formation (VF) auf das Auslaufband (17) weitergibt.

2. Verfahren nach Anspruch 1, bei welchem die vordefinierte Formation (VF) drei Gebinde (5) umfasst, welche von der Greifeinrichtung (15) des Manipulators um 90° gedreht, umgelenkt und an das kontinuierlich betriebene Auslaufband (17) weitergegeben werden.

3. Verfahren nach Anspruch 1 oder Anspruch 2, bei welchem die Gebinde (5) und/oder Stückgüter zumindest anteilig über den mindestens einen Manipulator (7) gedreht werden.

4. Verfahren nach einem oder mehreren der Ansprüche 1 bis 3, bei welchem mehrere Gebinde (5) und/oder Stückgüter parallel in Richtung des mindestens einen Manipulators (7) geführt werden.

5. Verfahren nach einem oder mehreren der Ansprüche 1 bis 4, bei welchem auf einem dem kontinuierlich betriebenem Auslaufband (17) direkt nachgeordnetem Gruppierband (23) mit zweiter Förderrichtung (FR2) aus der vordefinierten Formation (VF) durch Verdichtung ihrer jeweiligen Gebinde (5) und/oder Stückgüter eine palettierfähige Lage gebildet wird.

6. Verfahren nach Anspruch 5, bei welchem zum Bilden der palettierfähigen Lage auf dem Gruppierband (23) in zweiter Förderrichtung (FR2) vorauseilende Gebinde (5) und/oder Stückgüter der jeweiligen vordefinierten Formation (VF) gegenüber den jeweils nachfolgenden Gebinden (5) und/oder Stückgütern der vordefinierten Formation (VF) durch ein senkrecht zur zweiten Förderrichtung (FR2) selektiv positionierbares Rückhalteelement (25) verzögert werden, bis sämtliche nachfolgenden Gebinde (5) und/oder Stückgüter der jeweiligen vordefinierten Formation (VF) an ihrem jeweils direkt vorauseilendem Gebinde (5) und/oder Stückgut anstehen.

7. Verfahren nach Anspruch 5 oder 6, bei welchem das Gruppierband (23) intermittierend betrieben wird und unmittelbar nach Bilden einer palettierfähigen Lage über ein bestimmtes Zeitintervall aussetzt.

8. Vorrichtung (1) zum Ausbilden einer vordefinierten Formation (VF) aus mehreren nebeneinander und hintereinander angeordneten Gebinden (5) und/oder Stückgütern auf einem Transportband zum Zwecke einer nachgeordneten Palettierung, umfassend wenigstens ein Zulaufband (11) mit erster Förderrichtung (FR1) zum Antransport mehrerer Gebinde (5) und/oder Stückgüter und wenigstens ein kontinuierlich betriebenes Auslaufband (17) zum nachgeordneten Abtransport der formierten Gebinde (5) und/oder Stückgüter und welche Vorrichtung (1) mindestens einen Manipulator (7) aufweist, der zur direkten Weitergabe der Gebinde (5) und/oder Stückgüter vom wenigstens einen Zulaufband (11) auf das wenigstens eine kontinuierlich betriebene Auslaufband (17) unter Berücksichtigung der vordefinierten Formation (VF) ausgebildet ist, **dadurch gekennzeichnet, dass** das Auslaufband (17) eine zweite Förderrichtung (FR2) aufweist, wobei die erste Förderrichtung (FR1) und die zweite Förderrichtung (FR2) im Wesentlichen lotrecht zueinander verlaufen, wobei
- der mindestens eine Manipulator (7) über eine eigene Horizontalfördereinrichtung (13) verfügt, die einem direkt anschließenden Zulaufband (11) und einem direkt vorgeordneten Auslaufband (17) zwischengeordnet, in erster Förderrichtung (FR1) fluchtend zum Zulaufband (11) und entlang eines ersten Endes des Auslaufbandes (17) angeordnet ist, wobei die eigene Horizontalfördereinrichtung (13), das direkt anschließende Zulaufband (11) und das direkt vorgeordnete Auslaufband (17) kontinuierlich betrieben werden und wobei
- der mindestens eine Manipulator eine Greifeinrichtung (15) umfasst, die innerhalb eines Arbeitsbereichs (AB) Gebinde (5) von der eigenen Horizontalfördereinrichtung (13) entgegennehmen, umlenken und unter Berücksichtigung der vordefinierten Formation (VF) auf das Auslaufband (17) weitergeben kann.

9. Vorrichtung (1) nach Anspruch 8, umfassend wenigstens ein dem mindestens einen Manipulator (7) vorgeordnetes Einteilband (9), welches Einteilband (9) wenigstens zwei parallel verlaufende Förderstrecken (29, 29') zum Transport von Gebinden (5) und/oder Stückgütern aufweist.

10. Vorrichtung (1) nach einem oder mehreren der Ansprüche 8 oder 9, bei welcher der mindestens eine Manipulator (7) wenigstens eine entlang drei Achsen bewegbare Greifeinrichtung (15, 15') umfasst.

11. Vorrichtung (1) nach Anspruch 10, bei welcher die wenigstens eine entlang drei Achsen bewegbare Greifeinrichtung (15, 15') mindestens einen um eine vertikale Achse drehbaren Greifkopf (19, 19') aufweist.

12. Vorrichtung (1) nach Anspruch 10 oder 11, bei welcher der mindestens eine Manipulator (7) wenigstens eine erste und wenigstens eine zweite selbständig und jeweils entlang drei Achsen bewegbare Greifeinrichtung (15, 15') umfasst, welche wenigstens eine erste Greifeinrichtung (15) und wenigstens eine zweite Greifeinrichtung (15') miteinander zur Positionierung und/oder Weitergabe der Gebinde (5) und/oder Stückgüter auf das Auslaufband (17) unter Berücksichtigung der vordefinierten Formation (VF) in Wirkverbindung gebracht sind.

13. Vorrichtung (1) nach Anspruch 8 und 12, bei welcher die über die erste (29) der beiden Förderstrecken (29, 29') transportieren Gebinde (5) und/oder Stückgüter mittels der wenigstens einen ersten Greifeinrichtung (15) an das wenigstens eine kontinuierlich betriebene Auslaufband (17) weitergebbar und/oder auf dem wenigstens einem kontinuierlich betriebenem Auslaufband (17) positionierbar sind und bei welchem die über die zweite (29') der beiden Förderstrecken (29, 29') transportierten Gebinde (5) und/oder Stückgüter mittels der wenigstens einen zweiten Greifeinrichtung (15') an das wenigstens eine kontinuierlich betriebene Auslaufband (17) weitergebbar und/oder auf dem wenigstens einem kontinuierlich betriebenem Auslaufband (17) positionierbar sind.

14. Vorrichtung (1) nach Anspruch 12 oder 13, bei welcher die beiden Greifeinrichtungen (15, 15') hängend ausgebildet und über ein Schienensystem zur Erfassung und Weitergabe der Gebinde (5) an das Auslaufband (17) verfahrbar sind.

15. Vorrichtung (1) nach einem oder mehreren der Ansprüche 8 bis 14, welche eine dem mindestens einen Manipulator (7) nachgeordnete Gruppiereinrichtung (21) aufweist, die zur Bildung einer palettierfähigen Lage unter Verdichtung der vordefinierten Formation (VF) ausgebildet ist, wobei die Gruppiereinrichtung (21) ein dem wenigstens einem kontinuierlich betriebenem Auslaufband (17) direkt nachgeordnetes und intermittierend betriebenes Gruppierband (23) mit zweiter Förderrichtung (FR2) aufweist, welches Gruppierband (23) während und/oder nach Bilden der palettierfähigen Lage über ein bestimmtes Zeitintervall aussetzt.

## Claims

1. A method for forming a predefined formation (VF) of a plurality of bundles (5) and/or piece goods on a conveyor belt for the purpose of a palletising performed downstream, in which method
- a plurality of bundles (5) and/or piece goods are guided in the first conveying direction (FR1) on at least one infeed conveyor belt (11) toward at least one manipulator (7),
- are deflected and passed on with regard to the predefined formation (VF) to at least one continuously operated outfeed conveyor belt (17) by means of the at least one manipulator (7),
- are removed in the predefined formation (VF) via the at least one continuously operated outfeed conveyor belt (17), wherein the predefined formation (VF) consists of bundles (5) and/or piece goods that are arranged next to and behind one another, **characterised in that**
- the outfeed conveyor belt (17) has a second conveying direction (FR2), which runs substantially perpendicular to the first conveying direction (FR1), wherein
- the at least one manipulator (7) has its own horizontal conveying device (13), which is arranged between the immediately subsequent infeed conveyor belt (11) and the immediately upstream outfeed conveyor belt (17) in alignment in the first conveying direction (FR1) with the infeed conveyor belt (11) and along a first end of the outfeed conveyor belt (17), wherein the own horizontal conveying device (13), the immediately subsequent infeed conveyor belt (11) and the immediately upstream outfeed conveyor belt (17) are continuously operated, and wherein
- a gripping device (15) of the manipulator (7) receives bundles (5) from its own horizontal conveying device (13) within a working area (AB), deflects them and passes them on with regard to the predefined formation (VF) to the outfeed conveyor belt (17).

2. The method as recited in claim 1, in which the predefined formation (VF) comprises three bundles (5), which are rotated by the gripping device (15) of the manipulator by 90°, deflected and passed on to the continuously operated outfeed conveyor belt (17).

3. The method as recited in claim 1 or claim 2, in which the bundles (5) and/or the piece goods are at least partly rotated by the at least one manipulator (7).

4. The method as recited in one or more of the claims 1 to 3, in which a plurality of bundles (5) and/or piece goods are guided in parallel toward the at least one manipulator (7).

5. The method as recited in one or more of the claims 1 to 4, in which a palletisable layer is formed from the predefined formation (VF) by compacting its respective bundles (5) and/or piece goods on a grouping belt (23) with a second conveying direction (FR2), which grouping belt (23) is arranged immediately downstream from the continuously operated outfeed conveyor belt (17).

6. The method as recited in claim 5, in which, for the purpose of forming the palletisable layer, bundles (5) and/or piece goods of the respective predefined formation (VF), which bundles (5) and/or piece goods are preceding on the grouping belt (23) in a second conveying direction (FR2), are delayed in relation to the in each case subsequent bundles (5) and/or piece goods of the predefined formation (VF) by means of a selectively positionable retaining element (25) that is perpendicular to the second conveying direction (FR2), until all subsequent bundles (5) and/or piece goods of the respective predefined formation (VF) are lined up against their in each case immediately preceding bundle (5) and/or piece good.

7. The method as recited in claim 5 or 6, in which the grouping belt (23) is operated intermittently and discontinues for a specific time interval immediately after forming a palletisable layer.

8. An apparatus (1) for forming a predefined formation (VF) of a plurality of bundles (5) and/or piece goods that are arranged next to and behind one another on a conveyor belt for the purpose of a palletising performed downstream, comprising at least one infeed conveyor belt (11) with a first conveying direction (FR1) for the purpose of feeding a plurality of bundles (5) and/or piece goods and comprising at least one continuously operated outfeed conveyor belt (17) for the downstream removal of the formed bundles (5) and/or piece goods, and which apparatus (1) has at least one manipulator (7), which is designed for directly passing on the bundles (5) and/or piece goods with regard to the predefined formation (VF) from the at least one infeed conveyor belt (11) onto the at least one continuously operated outfeed conveyor belt (17), **characterised in that** the outfeed conveyor belt (17) has a second conveying direction (FR2), wherein the first conveying direction (FR1) and the second conveying direction (FR2) run substantially perpendicular to one another, wherein
- the at least one manipulator (7) has its own horizontal conveying device (13), which is arranged between an immediately subsequent infeed conveyor belt (11) and an immediately upstream outfeed conveyor belt (17) in alignment in the first conveying direction (FR1) with the infeed conveyor belt (11) and along a first end of the outfeed conveyor belt (17), wherein the own horizontal conveying device (13), the immediately subsequent infeed conveyor belt (11) and the immediately upstream outfeed conveyor belt (17) are continuously operated and wherein
- the at least one manipulator comprises a gripping device (15), which can receive bundles (5) from its own horizontal conveying device (13) within a working area (AB), can deflect them and can pass them on with regard to the predefined formation (VF) to the outfeed conveyor belt (17).

9. The apparatus (1) as recited in claim 8, comprising at least one divider belt (9) arranged upstream from the at least one manipulator (7), which divider belt (9) has at least two conveyor lines (29, 29') running parallel to one another for the purpose of transporting bundles (5) and/or piece goods.

10. The apparatus (1) as recited in one or more of the claims 8 or 9, in which the at least one manipulator (7) comprises at least one gripping device (15, 15'), which is movable along three axes.

11. The apparatus (1) as recited in claim 10, in which the at least one gripping device (15, 15'), which is movable along three axes, has at least one gripping head (19, 19'), which is rotatable about a vertical axis.

12. The apparatus (1) as recited in claim 10 or 11, in which the at least one manipulator (7) comprises at least one first and at least one second gripping device (15, 15'), which are independently movable in each case along three axes, which at least one first gripping device (15) and at least one second gripping device (15') are brought into operative connection with each other for the purpose of positioning and/or passing on the bundles (5) and/or piece goods with regard to the predefined formation (VF) onto the outfeed conveyor belt (17).

13. The apparatus (1) as recited in claim 8 and 12, in which the bundles (5) and/or piece goods being transported via the first (29) of the two conveyor lines (29, 29') can be passed on to the at least one continuously operated outfeed conveyor belt (17) and/or can be positioned on the at least one continuously operated outfeed conveyor belt (17) by means of the at least one first gripping device (15), and in which the bundles (5) and/or piece goods being transported via the second (29') of the two conveyor lines (29, 29') can be passed on to the at least one continuously operated outfeed conveyor belt (17) and/or can be positioned on the at least one continuously operated outfeed conveyor belt (17) by means of the at least one second gripping device (15').

14. The apparatus (1) as recited in claim 12 or 13, in which the two gripping devices (15, 15') are designed so as to be suspended and movable via a rail system for the purpose of seizing and passing on the bundles (5) to the outfeed conveyor belt (17).

15. The apparatus (1) as recited in one or more of the claims 8 to 14, which has a grouping device (21) arranged downstream from the at least one manipulator (7), which grouping device (21) is designed for forming a palletisable layer by way of compacting the predefined formation (VF), wherein the grouping device (21) has an intermittently operated grouping belt (23) with a second conveying direction (FR2), which grouping belt (23) is arranged immediately downstream from the at least one continuously operated outfeed conveyor belt (17), and which grouping belt (23) discontinues for a specific time interval during and/or after forming the palletisable layer.

## Revendications

1. Procédé de réalisation d'une formation prédéfinie (VF) à partir d'une pluralité de multipacks (5) et/ou produits de détail sur une bande transporteuse en vue d'une palettisation effectuée en aval, dans ledit procédé
- plusieurs multipacks (5) et/ou produits de détail sont guidés dans une première direction de transport (FR1) sur au moins une bande d'alimentation (11) vers au moins un manipulateur (7),
- sont déviés et transmis à au moins une bande de sortie (17) fonctionnant en continu, au moyen dudit au moins un manipulateur (7) en tenant compte de la formation prédéfinie (VF),
- sont évacués dans la formation prédéfinie (VF) par ladite au moins une bande de sortie fonctionnant en continu, la formation prédéfinie (VF) se composant de multipacks (5) et/ou produits de détail disposés les uns à côté des autres et les uns derrière les autres, **caractérisé par le fait que**
- ladite bande de sortie (17) présente une deuxième direction de transport (FR2) qui s'étend pour l'essentiel perpendiculairement à la première direction de transport (FR1), dans lequel
- ledit au moins un manipulateur (7) dispose d'un propre dispositif de transport horizontal (13) qui est intercalé entre la bande d'alimentation (11) directement suivante et la bande de sortie (17) disposée directement en amont, est disposé en alignement par rapport à la bande d'alimentation (11) dans la première direction de transport (FR1) et le long d'une première extrémité de la bande de sortie (17), dans lequel le propre dispositif de transport horizontal (13) la bande d'alimentation (11) directement suivante et la bande de sortie (17) disposée directement en amont fonctionnent en continu, et dans lequel
- un dispositif de préhension (15) du manipulateur (7) prend des multipacks (5), à l'intérieur d'une zone de travail (AB), en provenance dudit propre dispositif de transport horizontal (13), dévie ceux-ci et les transmet à la bande de sortie (17) en tenant compte de la formation prédéfinie (VF).

2. Procédé selon la revendication 1, dans lequel la formation prédéfinie (VF) comprend trois multipacks (5) qui sont tournés de 90°, déviés et transmis à la bande de sortie (17) fonctionnant en continu par ledit dispositif de préhension (15) du manipulateur.

3. Procédé selon la revendication 1 ou la revendication 2, dans lequel les multipacks (5) et/ou produits de détail sont tournés au moins proportionnellement par ledit au moins un manipulateur (7).

4. Procédé selon l'une ou plusieurs des revendications 1 à 3, dans lequel plusieurs multipacks (5) et/ou produits de détail sont guidés parallèlement en direction dudit au moins un manipulateur (7).

5. Procédé selon l'une ou plusieurs des revendications 1 à 4, dans lequel, sur une bande de groupement (23) ayant une deuxième direction de transport (FR2) et disposée directement en aval de la bande de sortie (17) fonctionnant en continu, une couche palettisable est formée à partir de la formation prédéfinie (VF) par serrage de ses multipacks (5) et/ou produits de détail respectifs.

6. Procédé selon la revendication 5, dans lequel, pour former la couche palettisable sur ladite bande de groupement (23), des multipacks (5) et/ou produits de détail de la formation prédéfinie (VF) respective qui sont en avance dans la deuxième direction de transport (FR2) sont ralentis par l'intermédiaire d'un élément de retenue (25) positionnable de manière sélective perpendiculairement à la deuxième direction de transport (FR2), par rapport aux multipacks (5) et/ou produits de détail de la formation prédéfinie (VF) qui viennent respectivement après, jusqu'à ce que l'ensemble desdits multipacks (5) et/ou produits de détail de la formation prédéfinie (VF) respective, qui viennent après, se trouvent contre leur multipack (5) et/ou produit de détail respectivement directement précédent.

7. Procédé selon la revendication 5 ou 6, dans lequel la bande de groupement (23) fonctionne de manière intermittente et est interrompue pendant un intervalle de temps déterminé immédiatement après la formation d'une couche palettisable.

8. Dispositif (1) de réalisation, sur une bande transporteuse, d'une formation prédéfinie (VF) à partir d'une pluralité de multipacks (5) et/ou produits de détail disposés les uns à côté des autres et les uns derrière les autres, en vue d'une palettisation effectuée en aval, comprenant au moins une bande d'alimentation (11) ayant une première direction de transport (FR1) et destinée à amener une pluralité de multipacks (5) et/ou produits de détail ainsi qu'au moins une bande de sortie (17) fonctionnant en continu pour l'évacuation en aval des multipacks (5) et/ou produits de détail formés, et lequel dispositif (1) présente au moins un manipulateur (7) qui est adapté pour transmettre les multipacks (5) et/ou produits de détail directement de ladite au moins une bande d'alimentation (11) à ladite au moins une bande de sortie (17) fonctionnant en continu, en tenant compte de la formation prédéfinie (VF), **caractérisé par le fait que** ladite bande de sortie (17) présente une deuxième direction de transport (FR2), dans lequel la première direction de transport (FR1) et la deuxième direction de transport (FR2) s'étendent pour l'essentiel perpendiculairement l'une à l'autre, dans lequel
- ledit au moins un manipulateur (7) dispose d'un propre dispositif de transport horizontal (13) qui est intercalé entre une bande d'alimentation (11) directement suivante et une bande de sortie (17) disposée directement en amont, est disposé en alignement par rapport à la bande d'alimentation (11) dans la première direction de transport (FR1) et le long d'une première extrémité de la bande de sortie (17), dans lequel ledit propre dispositif de transport horizontal (13), la bande d'alimentation (11) directement suivante et la bande de sortie (17) disposée directement en amont fonctionnent en continu, et dans lequel
- ledit au moins un manipulateur (7) comprend un dispositif de préhension (15) qui est apte à prendre des multipacks (5), à l'intérieur d'une zone de travail (AB), en provenance dudit propre dispositif de transport horizontal (13), à dévier ceux-ci et à les transmettre à la bande de sortie (17) en tenant compte de la formation prédéfinie (VF).

9. Dispositif (1) selon la revendication 8, comprenant au moins une bande de division (9) disposée en amont dudit au moins un manipulateur (7), laquelle bande de division (9) présente au moins deux sections de transport (29, 29') s'étendant parallèlement entre elles et destinées à transporter des multipacks (5) et/ou produits de détail.

10. Dispositif (1) selon l'une ou plusieurs des revendications 8 ou 9, dans lequel ledit au moins un manipulateur (7) comprend au moins un dispositif de préhension (15, 15') déplaçable le long de trois axes.

11. Dispositif (1) selon la revendication 10, dans lequel ledit au moins un dispositif de préhension (15, 15') déplaçable le long de trois axes présente au moins une tête de préhension (19, 19') apte à tourner autour d'un axe vertical.

12. Dispositif (1) selon la revendication 10 ou 11, dans lequel ledit au moins un manipulateur (7) comprend au moins un premier et au moins un deuxième dispositifs de préhension (19, 19') déplaçables indépendamment et chacun le long de trois axes, lequel au moins un premier dispositif de préhension (15) et lequel au moins un deuxième dispositif de préhension (15') sont mis en liaison active l'un avec l'autre pour le positionnement et/ou la transmission des multipacks (5) et/ou produits de détail à la bande de sortie (17) en tenant compte de la formation prédéfinie (VF).

13. Dispositif (1) selon la revendication 8 et 12, dans lequel les multipacks (5) et/ou produits de détail transportés sur la première (29) des deux sections de transport (29, 29') peuvent être transmis à ladite au moins une bande de sortie (17) fonctionnant en continu et/ou positionnés sur ladite au moins une bande de sortie (17) fonctionnant en continu, au moyen dudit au moins un premier dispositif de préhension (15), et dans lequel les multipacks (5) et/ou produits de détail transportés sur la deuxième (29') des deux sections de transport (29, 29') peuvent être transmis à ladite au moins une bande de sortie (17) fonctionnant en continu et/ou positionnés sur ladite au moins une bande de sortie (17) fonctionnant en continu, au moyen dudit au moins un deuxième dispositif de préhension (15').

14. Dispositif (1) selon la revendication 12 ou 13, dans lequel les deux dispositifs de préhension (15, 15') sont réalisés de manière à être suspendus et peuvent être déplacés par le biais d'un système à rail pour saisir et transmettre les multipacks (5) à la bande de sortie (17).

15. Dispositif (1) selon l'une ou plusieurs des revendications 8 à 14, lequel présente un dispositif de groupement (21) qui est disposé en aval dudit au moins un manipulateur (7) et qui est adapté pour former une couche palettisable en serrant la formation prédéfinie (VF), dans lequel ledit dispositif de groupement (21) présente une bande de groupement (23) ayant une deuxième direction de transport (FR2) qui est disposée directement en aval de ladite au moins une bande de sortie (17) fonctionnant en continu et qui fonctionne de manière intermittente, laquelle bande de groupement (23) est interrompue pendant un intervalle de temps déterminé durant et/ou après la formation de la couche palettisable.
